# EUROPÄISCHE PATENTANMELDUNG

(11) **EP 0 751 051 A2**
(43) Veröffentlichungstag der Anmeldung: **02.01.1997**
(21) Anmeldenummer: 96109757.3
(22) Anmeldetag: 18.06.1996
(51) Int. Cl.: B60R 22/48

(54) **Verschluss für Sicherheitsgurte in Fahrzeugen**

(30) Priorität: 29.06.1995 DE 29510590 U
(71) Anmelder: TRW Occupant Restraint Systems GmbH, 73551 Alfdorf (DE)
(72) Erfinder: Wier, Franz, 73571 Göggingen (DE)
(74) Vertreter: Degwert, Hartmut, Dipl.-Phys.

(57) **Zusammenfassung**

Die Erfindung betrifft einen Verschluß für Sicherheitsgurte in Fahrzeugen, der ein lasttragendes Gehäuse, in dem eine Einsteckbahn für eine Steckzunge gebildet und ein Riegel beweglich angeordnet ist, sowie eine das Gehäuse umgebende Hülle und wenigstens einen elektrischen Schalter aufweist, der innerhalb der Hülle angeordnet ist. Gemäß der Erfindung ist vorgesehen, daß der Schalter (20; 40) durch eine Öffnung (18) an der von der Einsteckbahn abgelegenen Rückseite der Hülle (12) hindurch in den fertig montierten Verschluß eingesetzt ist.

## Beschreibung

Die Erfindung betrifft einen Verschluß für Sicherheitsgurte in Fahrzeugen, mit einem lasttragenden Gehäuse, in dem eine Einsteckbahn für eine Steckzunge gebildet und ein Riegel beweglich angeordnet ist, einer das Gehäuse umgebenden Hülle und wenigstens einem elektrischen Schalter, der innerhalb der Hülle angeordnet ist.

Elektrische Schalter in Verschlüssen für Sicherheitsgurte werden benötigt, um den Benutzungszustand des Sicherheitsgurts (angelegt/abgelegt) festzustellen. Sie werden bei Einstecken der Steckzunge betätigt und erzeugen so ein Signal, das über ein aus der Hülle des Verschlusses herausgeführtes Kabel zu einem Steuersystem geführt wird. Je nach Art des Steuersystems werden verschiedene Schalter benötigt. Für ein Gurtwarnsystem kann als elektrischer Schalter ein Öffner oder Schließer verwendet werden. Für ein Gurtwarnsystem in Kombination mit einem Gurtbringer wird als elektrischer Schalter ein Wechsler benötigt. Für ein Airbag-Abfrage-System wird schließlich ein Öffner oder Schließer mit zwei verschiedenen elektrischen Widerständen benötigt. Der Einbau dieser elektrischen Schalter mit den zugehörigen Anschlußkabeln erfolgt derzeit während der Montage des Verschlusses. Die Hülle des Verschlusses wird zweiteilig ausgebildet und erst nach Montage des oder der elektrischen Schalter am Gehäuse zusammengesetzt. Eine solche zweiteilige Hülle erfordert nicht nur einen erhöhten Montageaufwand gegenüber einer einteiligen Hülle, sie ist auch mechanisch weniger stabil und weniger gut gegen Eindringen von Verunreinigungen geschützt. Während die Montage eines Verschlusses ohne elektrische Schalter weitgehend automatisiert ist, erfordert die Ausstattung mit verschiedenartigen Schaltersystemen gesonderte Montage- und Kontrollschritte. Überdies wird die Handhabung bei der Montage durch vorhandene Schalter mit zugehörigen Anschlußkabeln erschwert.

Durch die vorliegende Erfindung wird die Fertigung von Verschlüssen, die mit elektrischen Schaltern ausgestattet sind, wesentlich vereinfacht. Gemäß der Erfindung wird der Schalter durch eine Öffnung an der von der Einsteckbahn abgelegenen Rückseite der Hülle hindurch in den fertig montierten Verschluß eingesetzt. Der Verschluß kann daher unabhängig davon, ob er mit einem elektrischen Schalter ausgestattet wird, fertig montiert und mit einer einteiligen Hülle versehen werden. Die Fertigung von Verschlüssen mit elektrischen Schaltern unterscheidet sich nicht mehr von der bei Verschlüssen ohne Schalter, wodurch der Mehraufwand für die Ausstattung mit elektrischen Schaltern stark vermindert wird.

Bei der bevorzugten Ausführungsform wird der Schalter an dem Gehäuse des Verschlusses durch eine Rastverbindung befestigt, so daß er lediglich durch die Öffnung an der Rückseite der Hülle eingeschoben werden muß.

Weitere Merkmale und Vorteile der Erfindung ergeben sich aus den Unteransprüchen sowie aus der folgenden Beschreibung anhand der beigefügten Zeichnungen. In den Zeichnungen zeigen:
Fig. 1 schematisch einen Verschluß für Sicherheitsgurte in Seitenansicht und in Draufsicht;
Fig. 2 schematisch denselben Verschluß mit eingesetztem elektrischen Schalter;
Fig. 3 einen Längsschnitt des Verschlusses; und
Fig. 4 einen Schnitt des Verschlusses parallel zur Ebene der Einsteckbahn.

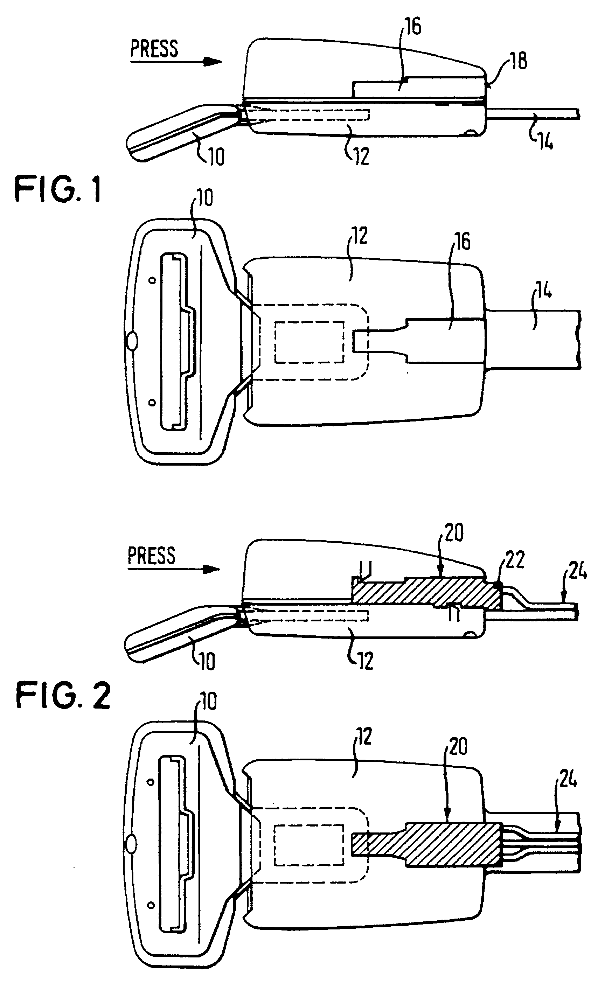

Bei dem in Fig. 1 gezeigten Verschluß handelt es sich um eine übliche Bauform, von der nur der Umriß gezeigt ist. Man erkennt eine Steckzunge 10, eine das Gehäuse des Verschlusses umgebende Hülle 12 und einen Befestigungsbeschlag 14. Im Inneren des Schlosses ist ein mit 16 bezeichneter Aufnahmeraum für einen oder mehrere elektrische Schalter vorgesehen. Dieser Aufnahmeraum 16 ist durch eine Öffnung 18 an der von der Steckzunge 10 abgewandten Rückseite der Hülle 12 zugänglich.

Wie in Fig. 2 gezeigt, kann in diesen Aufnahmeraum 16 ein elektrischer Schalter 20 eingesetzt werden, der durch schematisch dargestellte Schnappverbindungen mit dem Gehäuse verrastet ist. Aus der rückseitigen Öffnung 18 treten ein der Zugentlastung dienender Block 22 und ein Anschlußkabel 24 aus. Vorteilhafterweise wird die rückseitige Öffnung 18 nicht von dem Schalter 20 und dem Block 22 verschlossen, so daß Verunreinigungen, die in das Gehäuse des Verschlusses eingedrungen sind, herausfallen können. Bei einigen Anwendungen kann es dagegen zweckmäßig sein, daß die rückseitige Öffnung 18 der Hülle 12 durch den elektrischen Schalter 20 oder durch ein zusätzliches Element verschlossen wird.

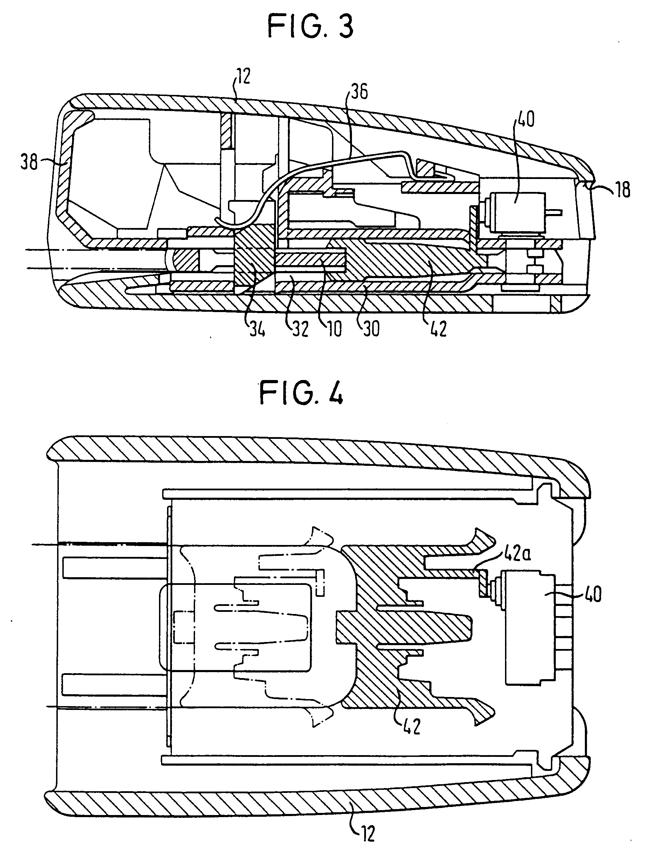

In den Figuren 3 und 4 sind die wesentlichen Funktionsteile des Verschlusses und die Anordnung eines elektrischen Schaltersystems dargestellt. Der Verschluß enthält in herkömmlicher Weise ein lasttragendes Gehäuse 30, das durch zwei parallele Stahlblechplatten gebildet ist. Zwischen diesen Platten des Gehäuses 30 ist eine Einsteckbahn 32 für die Steckzunge gebildet. Ein Riegel 34, der durch eine Feder 36 in seine Schließstellung belastet wird, ist quer zur Einsteckbahn 32 beweglich im Gehäuse 30 geführt. Die Betätigung des Verschlusses erfolgt mittels einer Taste 38, die an der Vorderseite des Verschlusses zugänglich ist. Die Hülle 12 umgibt das Gehäuse 30 mit der daran gelagerten Taste 38.

Ein durch die Öffnung 18 an der Rückseite der Hülle 12 eingebrachtes Schaltersystem 40 besteht aus mehreren nebeneinander gruppierten Schaltern, die auf der oberen Platte des Gehäuses 30, vorzugsweise mittels einer Rastverbindung, befestigt sind. Zwischen den Platten des Gehäuses 30 ist ein Auswerfer 42 geführt, der beim Einführen der Steckzunge 10 in die Einsteckbahn 32 zu dem Schaltersystem 40 hin vorgeschoben wird. An dem Auswerfer 42 ist ein elastischer Betätigungsansatz 42a angebracht, durch den das Schaltersystem 40 betätigt wird. Das Schaltersystem kann auch mit weiteren (nicht dargestellten) elektrischen Bauelementen versehen sein, beispielsweise elektrischen Widerständen, die an dem Gehäuse 30 befestigt sind. In den Figuren 3 und 4 ist das mehradrige Anschlußkabel für das Schaltersystem 40 nicht dargestellt.

## Patentansprüche

1. Verschluß für Sicherheitsgurte in Fahrzeugen, mit einem lasttragenden Gehäuse, in dem eine Einsteckbahn für eine Steckzunge gebildet und ein Riegel beweglich angeordnet ist, einer das Gehäuse umgebenden Hülle und wenigstens einem elektrischen Schalter, der innerhalb der Hülle angeordnet ist, dadurch gekennzeichnet, daß der Schalter (20; 40) durch eine Öffnung (18) an der von der Einsteckbahn abgelegenen Rückseite der Hülle (12) hindurch in den fertig montierten Verschluß eingesetzt ist.

2. Verschluß nach Anspruch 1, dadurch gekennzeichnet, daß der Schalter (20; 40) an dem Gehäuse (30) durch eine Rastverbindung befestigt ist.

3. Verschluß nach Anspruch 1 oder 2, dadurch gekennzeichnet, daß der Schalter (20; 40) mit daran befestigtem Anschlußkabel (24) sowie mit einer Zugentlastung für das Kabel in die Öffnung (18) an der Rückseite der Hülle (12) eingesetzt ist.

4. Verschluß nach einem der Ansprüche 1 bis 3, dadurch gekennzeichnet, daß mehrere elektrische Schalter (40) aufeinander oder nebeneinander gruppiert am Gehäuse (30) befestigt sind.

5. Verschluß nach einem der Ansprüche 1 bis 4, dadurch gekennzeichnet, daß der Schalter (20; 40) durch ein Funktionsteil (42) des Verschlusses direkt betätigbar ist.

6. Verschluß nach Anspruch 5, dadurch gekennzeichnet, daß der Schalter (40) durch einen Ansatz (42a) am Auswerfer (42) des Verschlusses betätigbar ist.

7. Verschluß nach einem der Ansprüche 1 bis 6, dadurch gekennzeichnet, daß die Öffnung (18) an der Rückseite der Hülle (12) durch den eingesetzten Schalterkörper dichtend verschlossen ist.

8. Verschluß nach einem der Ansprüche 1 bis 6, dadurch gekennzeichnet, daß die Öffnung (18) an der Rückseite der Hülle (12) auch bei eingesetztem Schalterkörper geöffnet ist.

9. Verschluß nach einem der Ansprüche 1 bis 8, dadurch gekennzeichnet, daß am Gehäuse (30) elektronische Bauteile befestigt sind.
